# EUROPÄISCHE PATENTSCHRIFT

(11) **EP 3 710 413 B1**
(45) Veröffentlichungstag und Bekanntmachung des Hinweises auf die Patenterteilung: **21.07.2021**
(21) Anmeldenummer: 18796427.5
(22) Anmeldetag: 31.10.2018
(51) Int. Cl.: C04B 7/36, C04B 7/42

(54) **VERFAHREN UND ANLAGE ZUR THERMISCHEN BEHANDLUNG VON FLUGFÄHIGEM UND KARBONATHALTIGEM AUSGANGSMATERIAL**
METHOD AND INSTALLATION FOR THE THERMAL TREATMENT OF DISPERSIBLE CARBONATE-CONTAINING RAW MATERIAL
PROCÉDÉ ET INSTALLATION DE TRAITEMENT THERMIQUE D'UN MATÉRIAU DE DÉPART DISPERSIBLE ET CONTENANT DES CARBONATES

(30) Priorität: 16.11.2017 DE 102017126961
(43) Veröffentlichungstag der Anmeldung: 23.09.2020
(73) Patentinhaber: thyssenkrupp Industrial Solutions AG, 45143 Essen (DE); thyssenkrupp AG, 45143 Essen (DE)
(72) Erfinder: WILLMS, Eike, 44309 Dortmund (DE)
(74) Vertreter: thyssenkrupp Intellectual Property GmbH
(86) Internationale Anmeldenummer: PCT/EP2018/079792
(87) Internationale Veröffentlichungsnummer: WO 2019/096583

(56) Entgegenhaltungen:
- WO-A1-01/32581
- US-A- 3 632 018

## Beschreibung

Die Erfindung betrifft ein Verfahren und eine Ablage zur thermischen Behandlung von flugfähigem und karbonathaltigem Ausgangsmaterial, insbesondere von Zementrohmaterial.

Das karbonathaltige Ausgangsmaterial wird zunächst in einem Vorwärmer vorgewärmt und anschließend in einem Calcinator calciniert wird, wobei dem Calcinator Brennstoff zugeführt wird. Die Umsetzung des karbonathaltigen Ausgangsmaterials im Calcinator wird dabei durch Messung wenigstens eines Parameters überwacht.

WO 01/32581 A1 offenbart ein Verfahren zur thermischen Behandlung von flugfähigem und karbonathaltigem Ausgangsmaterial wobei die Umsetzung des karbonathaltigen Ausgangsmaterials im Calcinator durch Messung wenigstens eines Parameters überwacht wird.

Aus der DE 199 50 981 B1 ist ein Verfahren zur Umsetzung einer Substanz unter Wärmezufuhr in einem Drehrohrofen bekannt, wobei spektroskopische Daten der umzusetzenden Substanz und der Flamme des Brenners im Drehrohrofen erfasst werden, um die Betriebsweise des Drehrohrofens zur Umsetzung der Substanz zu steuern. Ferner sind aus der Praxis verschiedene Systeme bekannt, bei denen der Brennstoffeintrag in einen Calcinator über eine Temperaturregelung im Calcinator oder nach der untersten Zyklonstufe erfolgt.

Grundsätzlich sind solche Systeme ohne weiteres verwendbar, wenn eine hinreichende Brennstoffhomogenität, beispielsweise charakterisiert über Heizwert, Restfeuchte, chemische Zusammensetzung oder Partikelgröße und -form vorliegt. Diese Anforderungen an die Homogenität werden in der Regel über Regelbrennstoffe, wie Kohlen, Anthrazitkohlen oder flüssige und gasförmige Regelbrennstoffe sowie bestimmte Ersatzbrennstoffe, wie Tiermehl, getrockneter Klärschlamm oder stark aufbereitete Ersatzbrennstoffe eingehalten.

Aufgrund der geringeren Kosten und/oder des Aufwandes, der für heizwertarme, wenig sortierte und grob aufbereitete Ersatzbrennstoffe anfällt, ist es aus techno-ökonomischer Sicht wünschenswert, diese Brennstoffe möglichst gut zu verbrennen, wobei der Prozess dabei aber nicht destabilisiert werden darf. Bei wenig aufbereiteten und inhomogenen Brennstoffen, wie gering aufbereiteten Haus- oder Sperrmüllfraktionen, ist eine zeitlich gut aufgelöste, genaue Charakterisierung praktisch kaum möglich und damit auch das Verbrennungsverhalten nicht vorhersagbar. Auch bei Systemen, bei denen stoßweise Brennstoff in das System gegeben wird, wie z.B. bei einer Ganzreifenverbrennung, kann der Zeitrahmen, in welchem die Verbrennung abläuft und die Energiemenge, die hierdurch freigesetzt wird, praktisch kaum vorhergesagt werden.

Aus der JP 2000272941 A ist ein Verfahren zur Herstellung von Zementklinker bekannt, bei dem im Calcinator brennbare Ersatzbrennstoffe zum Einsatz kommen. Die automatisierte Fahrweise des Calcinators erfolgt über eine Regelung der Brennstoffzufuhr in Abhängigkeit von Messwerten.

Die DE 10 2004 038 313 A1 beschreibt ein Verfahren zur Herstellung von Zement, wobei in einer Calciniereinrichtung feste Abfallbrennstoffe verbrannt werden. Weiterhin kann ein zusätzlicher Brenner mit einem schnell reagierenden Brennstoff, wie Kohle, Gas oder Öl beschickt werden. Die Steuerung des schnell reagierenden Brennstoffs erfolgt über eine Regelschleife mit einem Thermoelement, welches die Temperatur am Gasausgang des untersten Zyklons misst.

In der WO 2016/166076 A1 wird zur Vergasung von schwierigen Brennstoffen im Rahmen der Herstellung von Zementklinker vorgeschlagen, einen Reaktor zur Umsetzung dieser Brennstoffe vorzusehen, der auf dem Strömungsweg des Abgases des Drehrohrofens zum Calcinator dem Calcinator vorgeschaltet ist und zu dem eine Zuleitung für das Abgas des Drehrohrofens führt. Zur Steuerung der im Reaktor stattfindenden Vergasung ist eine Kühlung durch Zugabe von Rohmehl und eine Eindüsung von Wasserdampf oder Wasser vorgesehen. Bei der Zugabe von Rohmehl wird dabei ein Teil des vorgewärmten Rohmehls zwischen Vorwärmer und Calcinator abgezweigt und dem Reaktor zugeführt. In Abhängigkeit der zum Reaktor abgezweigten Rohmehlmenge schwankt dadurch die dem Calcinator aufgegebene Menge des vorgewärmten Rohmehls, wodurch sich das Verhältnis des dem Calcinator zugeführten Brennstoffs zum zugeführten Rohmehl verändert und den Calcinationsprozess nachteilig beeinflusst.

Der Erfindung liegt daher die Aufgabe zugrunde, ein Verfahren und eine Anlage zur thermischen Behandlung von flugfähigem und karbonathaltigem Ausgangsmaterial anzugeben, wobei auch bei einem Einsatz von wenig aufbereiteten und inhomogenen Brennstoffen eine stabile Betriebsweise des Calcinators gewährleistet ist.

Erfindungsgemäß wird diese Aufgabe dadurch gelöst, dass das Ausgangsmaterial in einem Vorwärmer vorgewärmt und anschließend in einem Calcinator calciniert wird, wobei dem Calcinator Brennstoff zugeführt wird und die Umsetzung des karbonathaltigen Ausgangsmaterials im Calcinator durch Messung wenigstens eines Parameters überwacht und durch Zugabe eines Zuschlagstoffs in Abhängigkeit des gemessenen Parameters beeinflusst wird. Der Zuschlagstoff wird dabei durch ein karbonathaltiges Material gebildet und in einem Vorratsbehälter bereitgestellt, der über eine Zuschlagstoff-Zuführeinrichtung mit dem Vorwärmer oder dem Calcinator verbunden ist und der Zuschlagstoff innerhalb von maximal 30 Sekunden, vorzugsweise maximal 10 Sekunden, vom Vorratsbehälter über die Zuschlagstoff-Zuführeinrichtung in den Vorwärmer oder den Calcinator gelangt.

Hierdurch besteht die Möglichkeit, den Verbrennungsprozess im Calcinator mittels eines homogen vorliegenden Zuschlagsstoffs, bei dem es sich vorzugsweise um das karbonathaltige Ausgangsmaterial handelt, zu korrigieren. Durch die kurze Zuführzeit von maximal 30 Sekunden kann sehr kurzfristig auf Prozessänderungen reagiert werden, um etwaige (insbesondere durch den zugeführten Brennstoff bedingte) Schwankungen in der Betriebsweise des Calcinators auszugleichen.

Die für die Durchführung des erfindungsgemäßen Verfahrens vorgesehene Anlage zur thermischen Behandlung des flugfähigen und karbonathaltigen Ausgangsmaterials besteht im Wesentlichen aus einem Vorwärmer zum Vorwärmen des Ausgangsmaterials und einem Calcinator zum Calcinieren des vorgewärmten Ausgangsmaterials, wobei der Calcinator eine Brennstoffzufuhreinrichtung zur Aufgabe eines Brennstoffs und eine mit dem Calcinator in Verbindung stehende Zuführeinrichtung für das vorgewärmte Ausgangsmaterial aufweist. Weiterhin ist wenigstens einer Messeinrichtung zur Messung wenigstens eines die Umsetzung des vorgewärmten Ausgangsmaterials im Calcinator anzeigenden Parameters sowie eine Steuer- und Regelungseinrichtung zur Regelung der Zugabe eines Zuschlagstoffs über eine Zuschlagstoff-Zuführeinrichtung in Abhängigkeit des gemessenen Parameters vorgesehen. Der Zugschlagstoff wird durch ein karbonathaltiges Material gebildet, das in einem Vorratsbehälter bereitgestellt ist, der über die Zuschlagstoff-Zuführeinrichtung mit dem Vorwärmer oder dem Calcinator verbunden ist und die Zuschlagstoff-Zuführeinrichtung ist für einen Transfer des Zuschlagsstoffs vom Vorratsbehälter zum Vorwärmer oder zum Calcinator in maximal 30 Sekunden ausgebildet.

Der durch karbonathaltiges Material gebildete Zuschlagstoff wird vorzugsweise durch einen Teil des karbonathaltigen Ausgangsmaterials oder einem anderen zu entsäuernden Material mit einer dem karbonathaltigen Ausgangsmaterial ähnlichen Zusammensetzung gebildet. Dadurch werden die Eigenschaften und die Zusammensetzung des herzustellenden Endprodukts, beispielsweise Zementklinker, nicht negativ beeinflusst. Außerdem hat die Zugabe eines zu entsäuernden Materials mit einem signifikanten Gehalt an CO₂ den Vorteil, dass eine vergleichsweise geringe Menge des Zuschlagstoffs verwendet werden muss, da die für die Entsäuerung (Calcination) notwendige Energiemenge im Vergleich groß ist. Mit der Korrektur über den Zuschlagstoff können somit neben den Schwankungen im Betrieb des Calcinators auch Schwankungen aus vorgeschalteten (im Sinne des Abgasstroms) Verbrennungsprozessen, wie dem Ofen, ausgeglichen werden.

Üblicherweise wird das karbonathaltige Ausgangsmaterial, beispielsweise Zementrohmehl, über eine als Becherwerk ausgebildete Fördereinrichtung zum Vorwärmer transportiert. Derartige Becherwerke haben eine Förderhöhe von bis zu 50m und mehr und benötigen Transportzeiten von bis zu einer Minute und mehr. Der Vorratsbehälter für den Zuschlagstoff wird daher vorzugsweise im Bereich des Vorwärmers oder des Calcinators, insbesondere in Höhe des Vorwärmers oder des Calcinators bereitgestellt wird, sodass die Zuschlagstoff-Zuführeinrichtung vergleichsweise kurz gehalten werden kann. Die Zuschlagstoff-Zuführeinrichtung für den Zuschlagstoff wird vorzugsweise durch eine Schwerkraftfördereinrichtung gebildet. Im Rahmen der Erfindung wäre es aber prinzipiell auch denkbar, dass sich der Vorratsbehälter auf Bodenniveau oder zumindest unterhalb des Calcinators befindet. Aber auch bei einer solchen Anordnung muss jedoch gewährleistet sein, dass die Zuschlagstoff-Zuführeinrichtung für einen Transfer des Zuschlagsstoffs vom Vorratsbehälter zum Vorwärmer oder zum Calcinator in maximal 30 Sekunden ausgebildet ist. Dies könnte in einem solchen Fall beispielsweise durch eine pneumatische Fördereinrichtung erreicht werden.

Der Vorratsbehälter wirkt zweckmäßigerweise mit einem Dosierorgan, beispielsweise einer Zellenradschleuse zusammen, die in Abhängigkeit des gemessenen Parameters angesteuert wird. Die Zugabe des Zuschlagstoffs zur Beeinflussung der Umsetzung des karbonathaltigen Ausgangsmaterials kann über die Zuschlagstoff-Zuführeinrichtung entweder direkt in den Calcinator oder aber auch in den Vorwärmer erfolgt. Das dem Vorwärmer aufgegebenen Ausgangsmaterial durchsetzt diesen üblicherweise in weniger als 10 s und gelangt dann in den Calcinator, sodass auch bei einem Transportweg über den Vorwärmer die geforderte, schnelle Zuführung des Zuschlagstoffs gewährleistet ist.

Die Umsetzung des karbonathaltigen Ausgangsmaterials im Calcinator wird durch Messung wenigstens eines Parameters überwacht. Als geeigneter, für die Umsetzung des karbonathaltigen Ausgangsmaterials aussagekräftige Parameter hat sich insbesondere die Temperatur des calcinierten Ausgangsmaterials und/oder der CO₂-Gehalt und/oder der Glühverlust des calcinierten Ausgangsmaterials und/oder die Temperatur eines den Calcinator verlassenden Abgases herausgestellt. Dabei ist es zweckmäßig, wenn ein oder mehrere für die Umsetzung des karbonathaltigen Ausgangsmaterials aussagekräftige Parameter mit einer schnell reagierenden Sensorik erfasst und hinreichend schnell analysiert werden. Die Mess- und Analysezeit sollte ebenfalls weniger als 30 Sekunden, vorzugsweise weniger als 10 Sekunden betragen. Eine hinreichend schnelle Sensorik ist beispielsweise mittels berührungsloser Temperaturmessung des calcinierten Ausgangsmaterials basierend auf Körperschall oder elektromagnetischer Strahlung möglich.

Weiterhin besteht beispielsweise die Möglichkeit Änderungen in der Energiezufuhr zum Calcinator anhand der Temperaturdifferenz zwischen Gas- und Feststofftemperatur ausgehend von einem Betriebspunkt, in welchem das System im Gleichgewicht steht, abzubilden, wobei ein plötzlicher Anstieg der Temperaturdifferenz dadurch bedingt sein kann, dass das System nicht mehr hinreichend durch die Calcinierung des vorhandenen Ausgangsmaterials gepuffert ist. Dabei wird ausgenutzt, dass es im oberen Calcinierungsbereich, d.h. bei einem Vorcalcinierungsgrad größer 90%, eine messbare Temperaturabhängigkeit bei geringen Änderungen des Vorcalcinierungsgrades besteht (1% Veränderung ist bereits messbar und kann Sprünge in einer Größenordnung von 5°C bedeuten).

Eine direkte Messung des Rest-CO₂-Gehalts im calcinierten Produkt (Calcinierungsgrad) des im Zyklon nach dem Calcinator abgeschiedenen Gutes ist beispielsweise durch eine optische Messmethodik (NIR-Technologie) möglich. Die Messung kann entweder als einzige Führungsgröße benutzt oder gemeinsam mit der Temperaturmessung der Materialtemperatur nach dem Calcinator unterstützt werden. Es ist auch vorstellbar, weitere Messgrößen zu verwenden, die die Informationen um den Rest-CO₂-Gehalt nach Calcinator anreichern. Hierzu können beispielsweise Messgrößen, wie Temperatur und Zusammensetzung des Gases aus dem Ofen, Temperaturmessstellen in der Gasphase des Calcinators, Temperatur des dem Calcinator zugegebenen Materialstroms, Informationen über Eigenschaften des Ersatzbrennstoffs und des Massenstroms sowie die dem Vorwärmer aufgegebene Mehlmenge herangezogen werden.

Die Messung des Rest-CO₂-Gehalts kann entweder direkt in der Leitung erfolgen, die den Zyklonabscheider nach dem Calcinator mit dem Ofen verbindet. In diesem Fall kann neben einer direkten Messung ein wahlweise gekühlter optischer Leiter zum Einsatz kommen, der das Messverfahren an sich mit der Messstelle koppelt.

Die Messung an sich kann aber auch in einem Bypass zur Mehlleitung zwischen unterster Zyklonstufe und Ofeneinlauf vorgenommen werden und insbesondere auch an einem Messort erfolgen, der Teil eines diskontinuierlichen Probenahmesystems ist. Das Probenentnahmesystem ist dabei durch einen Probennehmer gekennzeichnet, der das Produkt an geeigneter Stelle aus der Mahlleitung entnimmt und einem Kühl-, Sammel- bzw. Transportsystem zuteilt. Die Messung des Rest-CO₂-Gehalts des Mehles kann an einer dieser Stellen erfolgen. Der Messwert des optischen Sensors kann im Betrieb durch Analyse des Heißmehls mehrfach täglich abgeglichen. Hierdurch ist eine automatische Kalibrierung des optischen Sensors möglich.

Gemäß einer bevorzugten Ausgestaltung der Erfindung wird das karbonathaltige Ausgangsmaterial mit Hilfe einer gemeinsamen Fördereinrichtung, insbesondere einem Becherwerk, dem Vorwärmer und dem Vorratsbehälter zugeführt wird. Dabei kann zwischen dem Becherwerk und dem Vorwärmer ein Materialteiler vorgesehen werden, der derart angesteuert wird, dass das karbonathaltige Ausgangsmaterial in Abhängigkeit des Füllstands oder des Füllgewichts des Vorratsbehälters auf den Vorwärmer und den Vorratsbehälter aufgeteilt wird. Auf diese Weise kann die schon vorhandene Fördereinrichtung für das Ausgangsmaterial zum Vorwärmer auch zum Befüllen des Vorratsbehälters genutzt werden.

Das karbonathaltige Ausgangsmaterial ist in Silos gelagert und wird über wenigstens eine Dosiereinrichtung der Fördereinrichtung zugeführt wird, wobei die dem Vorwärmer und dem Vorratsbehälter zuzuführenden Gesamtmenge so dosiert wird, dass die dem Vorwärmer zuzuführende Menge an Rohmaterial unabhängig von der dem Vorratsbehälter zuzuführenden Menge an Rohmaterial konstant bleibt. Auf diese Weise wird eine stabile Betriebsweise des Vorwärmers und des Calcinators gewährleistet. Gleichzeitig ist immer eine ausreichende Menge an Zugschlagstoff im Vorratsbehälter vorhanden, sodass kurzfristig auf Betriebsschwankungen im Calcinator, die durch Messung des aussagekräftigen Parameters ermittelt werden, reagiert werden kann, ohne dass dabei die Betriebsweise des Vorwärmers durch eine Veränderung der dem Vorwärmer zugeführten Menge an karbonathaltigem Ausgangsmaterial gestört wird.

Ist am Calcinator ein separates Verbrennungsaggregat angeschlossen, welches dem Prozess neben Verbrennungsabgasen auch mindestens eine Teilcalcinierung von Material zur Verfügung stellt, ist es auch vorstellbar, die Menge des Ausgangsmaterials aus dem Vorratsbehälter mindestens teilweise dem separaten Verbrennungsaggregat zuzuführen.

Weitere Ausgestaltungen werden anhand der nachfolgenden Beschreibung und der Zeichnung erläutert.

In der Zeichnung zeigen:
- Fig. 1: eine schematische Darstellung einer erfindungsgemäßen Anlage gemäß einem ersten Ausführungsbeispiel,
- Fig. 2: eine schematische Darstellung einer erfindungsgemäßen Anlage gemäß einem zweiten Ausführungsbeispiel,
- Fig. 3: eine schematische Darstellung einer erfindungsgemäßen Anlage gemäß einem dritten Ausführungsbeispiel,
- Fig. 4: eine schematische Darstellung einer erfindungsgemäßen Anlage gemäß einem vierten Ausführungsbeispiel und
- Fig. 5: eine schematische Darstellung einer erfindungsgemäßen Anlage gemäß einem fünften Ausführungsbeispiel.

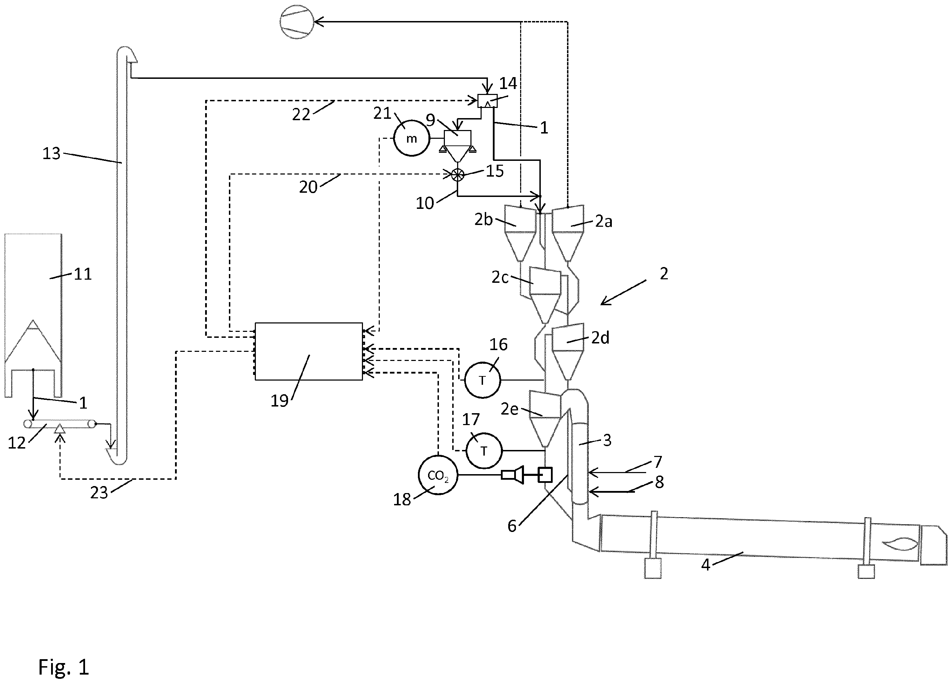

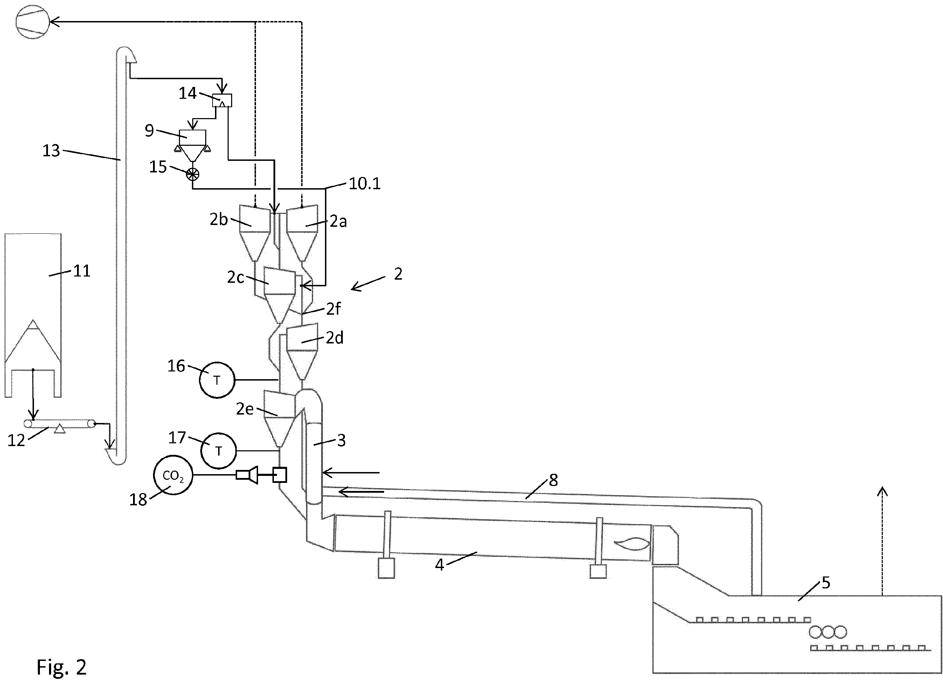

Bei der in Fig. 1 dargestellten Anlage zur thermischen Behandlung von flugfähigem und karbonathaltigem Ausgangsmaterial 1 handelt es sich insbesondere um eine Anlage zur Herstellung von Zementklinker aus Zementrohmehl. Sie besteht im Wesentlichen aus einem Vorwärmer 2 zum Vorwärmen des Ausgangsmaterials 1, einem Calcinator 3 zum Calcinieren des vorgewärmten Ausgangsmaterials, einem als Drehrohrofen ausgebildeten Ofen 4 und einem hier nicht dargestellten, aber beispielsweise aus Fig. 2 ersichtlichen Kühler 5.

Das karbonathaltige Ausgangsmaterial 1 wird am oberen Ende des mit mehreren Zyklonen 2a, 2b, 2c und 2d ausgebildeten Vorwärmers 1 aufgegeben. Die Abgase des Ofens 4 durchströmen nachfolgend den Calcinator 3 und den Vorwärmer 1 und dienen zur thermischen Behandlung des Ausgangsmaterials 1. Das im Vorwärmer vorgewärmte Ausgangsmaterial wird über eine Zuführeinrichtung 6 dem Calcinator 3 zugeführt. Dem Calcinator 3 wird über wenigstens eine Brennstoffzufuhreinrichtung 7 Brennstoff, insbesondere Ersatzbrennstoffe und über eine vom Kühler 5 kommende Tertiärluftleitung 8 Verbrennungsluft zugeführt. Weiterhin ist ein Vorratsbehälter 9 für einen Zuschlagstoff vorgesehen.

Das karbonathaltige Ausgangsmaterial 1 ist in wenigstens einem Silo 11 gelagert und wird über eine beispielsweise als Banddosierwaage ausgebildete Dosiereinrichtung 12 einer als Becherwerk ausgebildeten Fördereinrichtung 13 zugeführt, die das Ausgangsmaterial 1 bis in einer Höhe oberhalb des Vorwärmer 1 transportiert. Dort gelangt das Ausgangsmaterial 1 zunächst auf einen mengenmäßig einstellbaren Materialteiler 14, der mit einem ersten Ausgang mit dem Vorwärmer 1 und mit einem zweiten Ausgang mit dem Vorratsbehälter 9 in Verbindung steht. Der Auslass des Vorratsbehälters 9 ist mit einem Dosierorgan 15 versehen, das beispielweise durch eine Zellenradschleuse gebildet und steht über eine Zuschlagstoff-Zuführeinrichtung 10 mit dem Vorwärmer 1 der Art in Verbindung, dass das karbonathaltige Ausgangsmaterial 1 und der über das Dosierorgan 15 ausgegebene Zuschlagstoff dem Vorwärmer 1 gemeinsam aufgegeben werden.

Weiterhin sind eine erste Messeinrichtung 16, eine zweite Messeinrichtung 17 und eine dritte Messeinrichtung 18 zur Messung von Parametern vorgesehen, welche die Umsetzung des vorgewärmten Ausgangsmaterials im Calcinator 3 anzeigen. Dabei handelt es sich hier bei der ersten Messeinrichtung 16 um Temperatursensor zur Messung der Temperatur des den Calcinator 3 (nach einem Abscheidezyklon 2e) verlassenden Abgases. Die zweite Messeinrichtung 17 misst die Temperatur des calcinierten Ausgangsmaterials. Die dritte Messeinrichtung 18 ermittelt den CO₂-Gehalt des calcinierten Ausgangsmaterials. Selbstverständlich können auch mehr oder weniger Messeinrichtungen vorgesehen werden. So kann beispielsweise auch eine Messeinrichtung zur Ermittlung des Glühverlusts des calcinierten Ausgangsmaterials angeordnet werden.

Die gemessenen Parameter werden an eine Steuer- und Regelungseinrichtung 19 geleitet, welche die Messwerte analysiert und mit Vorgabewerten vergleicht. Über eine erste Steuerleitung 20 kann das Dosierorgan 15 in Abhängigkeit der gemessenen Parameter angesteuert werden, um die Menge des über den Vorwärmer 2 dem Calcinator 3 zuzuführenden Materials (Ausgangsmaterial 1 + Zuschlagstoff) durch Zudosierung des Zuschlagstoffs so anzupassen, dass etwaige Betriebsschwankungen (beispielsweise durch einen momentan erhöhten Energieeintrag durch den Brennstoff) ausgeglichen werden können.

Der Vorratsbehälter weist eine Füllstands- oder eine Füllgewichtsmesseinrichtung 21 auf, die mit der Steuer- und Regelungseinrichtung 19 in Verbindung steht, sodass über eine zweite Steuerleitung 22 der Materialteiler 14 so angesteuert werden kann, dass ein vorgegebener Füllstand / Füllgewicht im Vorratsbehälter 9 aufrechterhalten wird. Damit sich bei einem Nachfüllen des Vorratsbehälters nicht gleichzeitig die dem Vorwärmer über den Materialteiler zugeführte Menge an Ausgangsmaterial reduziert, wird über eine dritte Steuerleitung 23 die Fördermenge des Ausgangsmaterials 1 über die Dosiereinrichtung 12 temporär erhöht, bis der Vorratsbehälter wieder aufgefüllt ist. Die Füllmenge des Vorratsbehälters 9 wird idealerweise so gewählt, dass trotz der Totzeiten durch den Transport des Ausgangsmaterials über die Fördereinrichtung 13 Schwankungen in der Energiezufuhr des über Brennstoffzuführung 7 zugeführten Brennstoffs ausgeglichen werden können.

Gemäß einer weiteren Ausgestaltung der Erfindung kann vorgesehen werden, dass das dem Vorwärmer 2 zugeführte Material ständig durch eine Teilmenge aus dem Vorratsbehälter ergänzt wird. Dies hat den Vorteil, dass Schwankungen im Energieangebot nicht nur nach oben, sondern auch nach untern korrigiert werden können. Hierzu müsste der Materialteiler 14 so eingestellt werden, dass permanent ein Teilstrom von beispielsweise 2 bis 50%, vorzugsweise 2 bis 15% des gesamten über die Fördereinrichtung 13 zugeführten Ausgangsmaterials 1 dem Vorratsbehälter 14 zugeführt werden.

Das in Fig. 2 gezeigte zweite Ausführungsbeispiel unterscheidet sich vom ersten Ausführungsbeispiel nur durch die vom Vorratsbehälter 9 zum Vorwärmer 2 führenden Zuschlagstoff-Zuführeinrichtung 10.1, die nicht am oberen Endes des Vorwärmers 1 in diesen mündet, sondern in einen weiter unten liegenden Bereich des Vorwärmers. Im dargestellten Ausführungsbeispiel ist die Zuschlagstoff-Zuführeinrichtung 10.1 an eine vom zweituntersten Zyklon 2d zum darüber angeordneten Zyklon 2c führenden Leitung 2f angeschlossen. Dies hat folgende Vorteile: Die Materialzuteilung zum Ofensystem kann materialstromseitig zu einem späteren Zeitpunkt erfolgen, was die Reaktionszeit des Systems reduziert. Durch die Aufstellung des Vorratsbehälters in einem tieferen Teil des Vorwärmers werden geringere Lasten in die Konstruktion eingebracht. Die Aufstellung unterhalb der Bühne der Abscheidezyklone und auch die Materialzuteilung aus dem Materialstrom, der aus dem Becherwerk austritt, kann weitaus flexibler erfolgen, da in der weit überwiegenden Anzahl der ausgeführten Anlagen doppelt so viele Abscheidezyklone wie Systemzyklone verbaut werden.

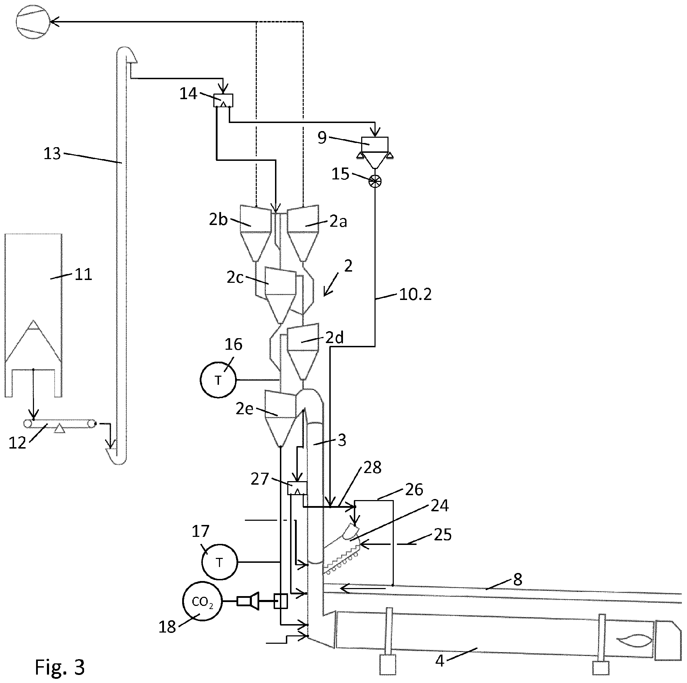

Im Ausführungsbeispiel gemäß Fig. 3 ist an den Calcinator 3 noch ein separates Verbrennungsaggregat 24 angeschlossen, das insbesondere für die Umsetzung von Sekundärbrennstoffen 25 vorgesehen werden kann. Die für die Umsetzung der Sekundärbrennstoffe 24 erforderliche Luft wird als vom Kühler kommende Tertiärluft 26 zugeführt. Das vorgewärmte Ausgangsmaterial wird im zweituntersten Zyklon 2d des Vorwärmers 2 abgeschieden und über einen einstellbaren Materialteiler 27 sowohl dem Calcinator 3 als auch dem separaten Verbrennungsaggregat 24 zugeführt.

Der Vorratsbehälter ist über das Dosierorgan 15 und die Zuschlagstoff-Zuführleitung 10.2 an eine vom Materialteiler 27 zum separaten Verbrennungsaggregat 24 führenden Verbindungsleitung 28 angeschlossen. In Abhängigkeit der Messeinrichtungen 16, 17, 18 kann über die Steuer- und Regelungseinrichtung 19 (siehe Fig. 1) die dem separaten Verbrennungsaggregat 24 und damit auch dem Calcinator 3 zuzuführende Menge an Material (Ausgangsmaterial + Zuschlagstoff) kurzfristig angepasst werden.

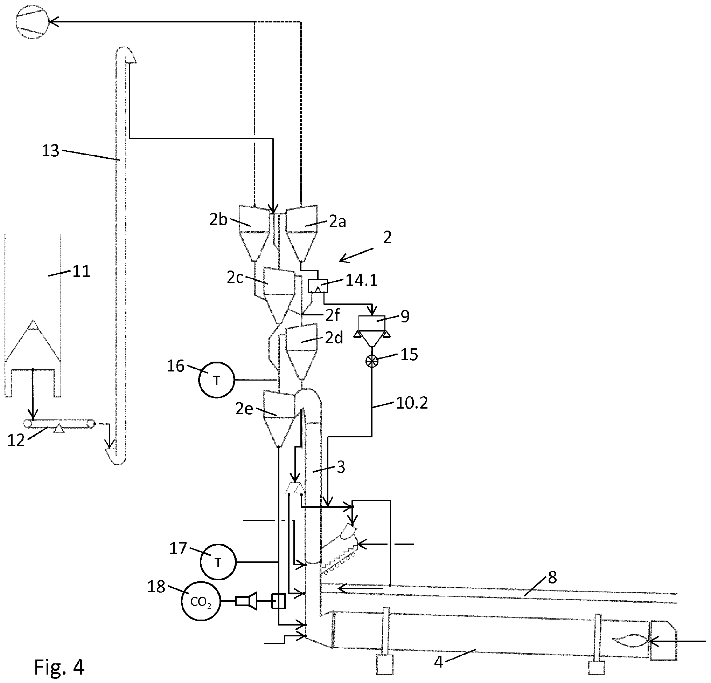

Fig. 4 zeigt schließlich noch ein viertes Ausführungsbeispiel, das im Wesentlichen dem dritten Ausführungsbeispiel entspricht und sich nur dadurch unterscheidet, dass der Materialteiler 14.1 nicht zwischen der Fördereinrichtung 13 und dem Vorwärmer 2 angeordnet ist, sondern an den Materialauslass des Zyklons 2a angeschlossen ist, sodass eine Teilmenge in den Vorratsbehälter 9 und die andere Teilmenge in die vom Zyklon 2d zum Zyklon 2c führende Leitung 2f mündet.

Im Vergleich zu den vorgenannten Ausführungsbeispielen hat die in Fig. 4 dargestellte Variante den Vorteil, dass durch das Abzweigen eines Stromes nach Abscheidezyklon dem Prozess eine stoffliche Zusammensetzung zugeführt wird, die die in den Ofen eintretende chemische Zusammensetzung besser annähert als der aus dem Rohmehlsilo entnommene Strom. Dies gilt insbesondere bei Anlagen, in denen die Rohmischung Komponenten aufweist, die in dem aus den Abscheidezyklonen austretendem Rohmehlstaub stärker repräsentiert sind als andere Komponenten. So genannte Segregationseffekte treten durch Übermahlung einzelner Komponenten in der Rohmühle auf. Dies gilt analog, wenn Mehl aus dem Zyklons 2c (dritter Zyklon von unten) entnommen wird.

In den Figuren 2 bis 4 wurde die aus Fig.1 bekannte Steuer- und Regelungseinrichtung 19 lediglich aus Gründen der Übersichtlichkeit nicht dargestellt. Sie ist selbstverständlich auch dort vorhanden und steuert das Dosierorgan 15 und die Dosiereinrichtung 12 in übereinstimmender Weise in Abhängigkeit der von den Messeinrichtungen 16, 15 und 18 gemessenen Parameter an.

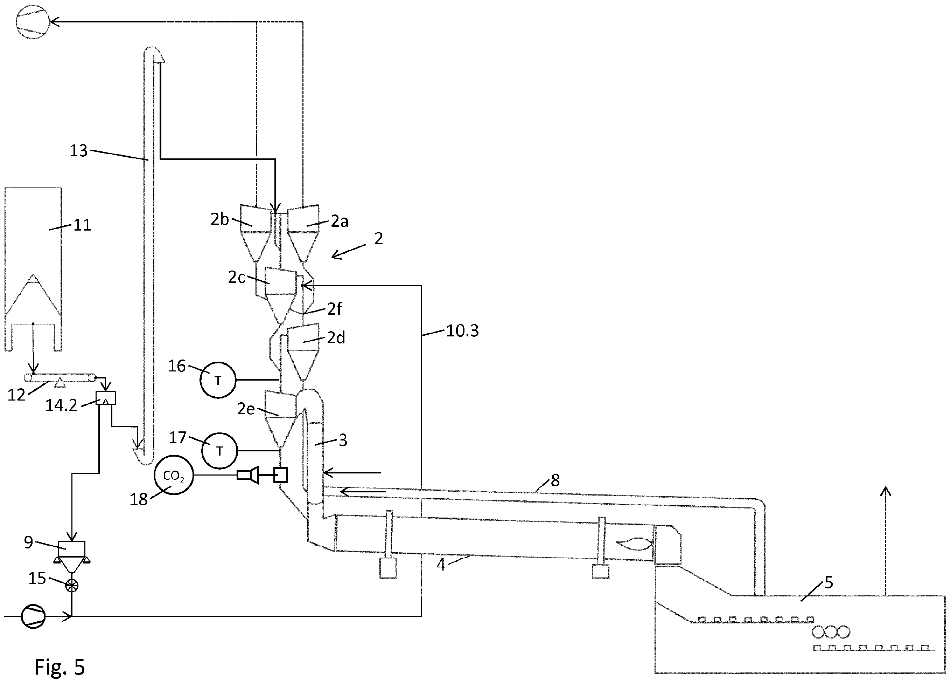

Fig. 5 zeigt schließlich noch ein fünftes Ausführungsbeispiel, bei dem der Materialteiler 14.2 zwischen dem Silo 11 und der Fördereinrichtung 13 angeordnet ist. Der Vorratsbehälter 9 kann hierbei auf Bodenniveau angeordnet werden. Um dennoch eine schnelle Reaktionszeit (innerhalb von maximal 30 Sekunden) für die Zugabe des Zuschlagstoffs zu gewährleisten, ist die Zuschlagstoff-Zuführeinrichtung 10.2 als pneumatische Transporteinrichtung ausgebildet und mündet, wie dargestellt, im Vorwärmer 2 oder alternativ im Calcinator.

## Patentansprüche

1. Verfahren zur thermischen Behandlung von flugfähigem und karbonathaltigem Ausgangsmaterial (1) wobei das Ausgangsmaterial (1) in einem Vorwärmer (2) vorgewärmt und anschließend in einem Calcinator (3) calciniert wird, wobei dem Calcinator (3) Brennstoff zugeführt wird und die Umsetzung des karbonathaltigen Ausgangsmaterials (1) im Calcinator (3) durch Messung wenigstens eines Parameters überwacht und durch Zugabe eines Zuschlagstoffs in Abhängigkeit des gemessenen Parameters beeinflusst wird,
**dadurch gekennzeichnet, dass** der Zuschlagstoff durch ein karbonathaltiges Material gebildet wird und in einem Vorratsbehälter (9) bereitgestellt wird, der über eine Zuschlagstoff-Zuführeinrichtung (10) mit dem Vorwärmer (2) oder dem Calcinator (3) verbunden ist und der Zuschlagstoff innerhalb von maximal 30 Sekunden vom Vorratsbehälter (9) über die Zuschlagstoff-Zuführeinrichtung (10) in den Vorwärmer (2) oder den Calcinator (3) gelangt.

2. Verfahren nach Anspruch 1, **dadurch gekennzeichnet, dass** der Zuschlagstoff innerhalb von maximal 10 Sekunden vom Vorratsbehälter (9) über die Zuschlagstoff-Zuführeinrichtung (10) in den Vorwärmer (2) oder den Calcinator (3) gelangt.

3. Verfahren nach Anspruch 1, **dadurch gekennzeichnet, dass** der Vorratsbehälter (9) im Bereich des Vorwärmers (2) oder des Calcinators (3) bereitgestellt wird.

4. Verfahren nach Anspruch 1, **dadurch gekennzeichnet, dass** der Zuschlagstoff durch einen Teil des karbonathaltigen Ausgangsmaterials (1) gebildet wird.

5. Verfahren nach Anspruch 1, **dadurch gekennzeichnet, dass** als Parameter die Temperatur des calcinierten Ausgangsmaterials (1) und/oder der CO₂-Gehalt und/oder der Glühverlust des calcinierten Ausgangsmaterials (1) und/oder die Temperatur eines den Calcinator (3) verlassenden Abgases gemessen werden.

6. Verfahren nach Anspruch 1, **dadurch gekennzeichnet, dass** die Zugabe des Zuschlagstoffs zur Beeinflussung der Umsetzung des karbonathaltigen Ausgangsmaterials (1) in den Vorwärmer (2) und/oder direkt in den Calcinator (3) erfolgt.

7. Verfahren nach Anspruch 1, **dadurch gekennzeichnet, dass** das karbonathaltige Ausgangsmaterial (1) mit Hilfe einer gemeinsamen Fördereinrichtung (13), insbesondere einem Becherwerk, dem Vorwärmer (2) und dem Vorratsbehälter (9) zugeführt wird.

8. Verfahren nach Anspruch 7, **dadurch gekennzeichnet, dass** zwischen der Fördereinrichtung (13) und dem Vorwärmer (2) ein Materialteiler (14) vorgesehen ist, der derart angesteuert wird, dass das karbonathaltige Ausgangsmaterial (1) in Abhängigkeit eines Füllstands oder eines Füllgewichts des Vorratsbehälters (9) auf den Vorwärmer (2) und den Vorratsbehälter (9) aufgeteilt wird.

9. Verfahren nach Anspruch 8, **dadurch gekennzeichnet, dass** karbonathaltige Ausgangsmaterial (1) über wenigstens eine Dosiereinrichtung (12) der Fördereinrichtung (13) zugeführt wird, wobei die dem Vorwärmer (2) und dem Vorratsbehälter (9) zuzuführende Gesamtmenge so dosiert wird, dass die dem Vorwärmer (2) zuzuführende Menge an karbonathaltigem Ausgangsmaterial (1) unabhängig von der dem Vorratsbehälter (9) zuzuführenden Menge an karbonathaltigem Ausgangsmaterial (1) konstant bleibt.

10. Anlage zur Durchführung des Verfahrens nach Anspruch 1 mit
- einem Vorwärmer (2) zum Vorwärmen des Ausgangsmaterials (1),
- einem Calcinator (3) zum Calcinieren des vorgewärmten Ausgangsmaterials (1), wobei der Calcinator (3) eine Brennstoffzufuhreinrichtung (7) zur Aufgabe eines Brennstoffs und eine mit dem Calcinator (3) in Verbindung stehende Zuführeinrichtung (6) für das vorgewärmte Ausgangsmaterial (1) aufweist,
- wenigstens einer Messeinrichtung (16, 17, 18) zur Messung wenigstens eines die Umsetzung des vorgewärmten Ausgangsmaterials (1) im Calcinator (3) anzeigenden Parameters,
- eine Steuer- und Regelungseinrichtung (19) zur Regelung der Zugabe eines Zuschlagstoffs über eine Zuschlagstoff-Zuführeinrichtung (10) in Abhängigkeit des gemessenen Parameters,
**dadurch gekennzeichnet, dass** der Zuschlagstoff durch ein karbonathaltiges Material gebildet ist, für das ein Vorratsbehälter (9) vorgesehen ist, der über die Zuschlagstoff-Zuführeinrichtung (10) mit dem Vorwärmer (2) oder dem Calcinator (3) verbunden ist und die Zuschlagstoff-Zuführeinrichtung (10) für einen Transfer des Zuschlagsstoffs vom Vorratsbehälter (9) zum Vorwärmer (2) oder zum Calcinator (3) in maximal 30 Sekunden ausgebildet ist.

11. Anlage nach Anspruch 10, **dadurch gekennzeichnet, dass** die Messeinrichtung (16, 17, 18) durch einen Temperatursensor zur Messung der Temperatur des calcinierten Ausgangsmaterials (1) und/oder durch einen Temperatursensor zur Messung der Temperatur eines den Calcinator (3) verlassenden Abgases und/oder durch einen CO₂-Sensor zur Messung des CO₂-Gehalts und/oder des Glühverlustes des calcinierten Ausgangsmaterials (1) gebildet ist.

12. Anlage nach Anspruch 10, **dadurch gekennzeichnet, dass** der Vorratsbehälter (9) einen Materialeinlass und einen Materialauslass aufweist, wobei der Materialauslass mit dem Vorwärmer (2) oder direkt mit dem Calcinator (3) verbunden ist.

13. Anlage nach Anspruch 10, **dadurch gekennzeichnet, dass** eine gemeinsame Fördereinrichtung (13) zum Zuführen des karbonathaltigen Ausgangsmaterials (1) zum Vorwärmer (2) und in den Vorratsbehälter (9) vorgesehen ist.

14. Anlage nach Anspruch 13, **dadurch gekennzeichnet, dass** zwischen der gemeinsamen Fördereinrichtung (13) und dem Vorwärmer (2) ein Materialteiler (14) vorgesehen ist und der Vorratsbehälter (9) eine Füllstands- oder Füllgewichtsmesseinrichtung (21) aufweist und die Steuer- und Regelungseinrichtung (19) mit der Füllstands- oder Füllgewichtsmesseinrichtung (21) und mit dem Materialteiler (14) in Verbindung steht, wobei die Steuer- und Regelungseinrichtung (19) zur Einstellung des Materialteilers (14) in Abhängigkeit des Füllstands oder Füllgewichts des Vorratsbehälters (9) ausgebildet ist.

15. Anlage nach Anspruch 10, **dadurch gekennzeichnet, dass** die Zuschlagstoff-Zuführeinrichtung (10, 10.1, 10.2, 10.3) für den Zuschlagstoff durch eine Schwerkraftfördereinrichtung oder eine pneumatische Fördereinrichtung gebildet ist.

## Claims

1. Process for thermally treating carbonate-containing starting material (1) which is capable of being entrained in a gas stream, where the starting material (1) is preheated in a preheater (2) and subsequently calcined in a calciner (3), where fuel is supplied to the calciner (3) and the reaction of the carbonate-containing starting material (1) in the calciner (3) is monitored by measurement of at least one parameter and is influenced by addition of an admixture as a function of the measured parameter,
**characterized in that** the admixture is formed by a carbonate-containing material and is made available in a stock vessel (9) which is connected via an admixture feed device (10) to the preheater (2) or the calciner (3) and the admixture goes within a maximum of 30 seconds from the stock vessel (9) via the admixture feed device (10) into the preheater (2) or the calciner (3).

2. Process according to Claim 1, **characterized in that** the admixture goes within a maximum of 10 seconds from the stock vessel (9) via the admixture feed device (10) into the preheater (2) or the calciner (3) .

3. Process according to Claim 1, **characterized in that** the stock vessel (9) is provided in the region of the preheater (2) or of the calciner (3).

4. Process according to Claim 1, **characterized in that** the admixture is formed by part of the carbonate-containing starting material (1).

5. Process according to Claim 1, **characterized in that** the temperature of the calcined starting material (1) and/or the CO₂ content and/or the loss on ignition of the calcined starting material (1) and/or the temperature of an offgas leaving the calciner (3) are measured as parameters.

6. Process according to Claim 1, **characterized in that** the addition of the admixture for influencing the reaction of the carbonate-containing starting material (1) is effected into the preheater (2) and/or directly into the calciner (3).

7. Process according to Claim 1, **characterized in that** the carbonate-containing starting material (1) is fed by means of a joint transport device (13), in particular a bucket conveyor, to the preheater (2) and the stock vessel (9).

8. Process according to Claim 7, **characterized in that** a material divider (14) is provided between the transport device (13) and the preheater (2) and is controlled in such a way that the carbonate-containing starting material (1) is divided between the preheater (2) and the stock vessel (9) as a function of a fill level or fill weight of the stock vessel (9) .

9. Process according to Claim 8, **characterized in that** the carbonate-containing starting material (1) is fed via at least one metering device (12) to the transport device (13), where the total amount to be fed to the preheater (2) and to the stock vessel (9) is regulated so that the amount of carbonate-containing starting material (1) to be fed to the preheater (2) remains constant independently of the amount of carbonate-containing starting material (1) to be fed to the stock vessel (9).

10. Plant for carrying out the process according to Claim 1, comprising
- a preheater (2) for preheating the starting material (1),
- a calciner (3) for calcining the preheated starting material (1), where the calciner (3) comprises a fuel feed device (7) for introduction of a fuel and a feed device (6) for the preheated starting material (1) which is connected to the calciner (3),
- at least one measuring device (16, 17, 18) for measuring at least one parameter which indicates the reaction of the preheated starting material (1) in the calciner (3),
- a control and regulating device (19) for regulating the addition of an admixture via an admixture feed device (10) as a function of the measured parameter,
**characterized in that** the admixture is formed by a carbonate-containing material for which a stock vessel (9) which is connected via the admixture feed device (10) to the preheater (2) or the calciner (3) is provided and the admixture feed device (10) is configured for transfer of the admixture from the stock vessel (9) to the preheater (2) or to the calciner (3) in a maximum of 30 seconds.

11. Plant according to Claim 10, **characterized in that** the measuring device (16, 17, 18) is formed by a temperature sensor for measuring the temperature of the calcined starting material (1) and/or by a temperature sensor for measuring the temperature of an offgas leaving the calciner (3) and/or by a CO₂ sensor for measuring the CO₂ content and/or the loss on ignition of the calcined starting material (1).

12. Plant according to Claim 10, **characterized in that** the stock vessel (9) comprises a material inlet and a material outlet, where the material outlet is connected to the preheater (2) or directly to the calciner (3).

13. Plant according to Claim 10, **characterized in that** a joint transport device (13) is provided for feeding the carbonate-containing starting material (1) to the preheater (2) and into the stock vessel (9) .

14. Plant according to Claim 13, **characterized in that** a material divider (14) is provided between the joint transport device (13) and the preheater (2) and the stock vessel (9) comprises a fill level or fill weight measuring device (21) and the control and regulating device (19) is connected to the fill level or fill weight measuring device (21) and to the material divider (14), where the control and regulating device (19) is configured for setting the material divider (14) as a function of the fill level or fill weight of the stock vessel (9).

15. Plant according to Claim 10, **characterized in that** the admixture feed device (10, 10.1, 10.2, 10.3) for the admixture is formed by a gravity transport device or a pneumatic transport device.

## Revendications

1. Procédé de traitement thermique d'un matériau de départ dispersible et contenant des carbonates (1), le matériau de départ (1) étant préchauffé dans un préchauffeur (2), puis calciné dans un calcinateur (3), du combustible étant amené au calcinateur (3), et la conversion du matériau de départ contenant des carbonates (1) dans le calcinateur (3) étant surveillée par mesure d'au moins un paramètre et étant influencée par ajout d'un additif en fonction du paramètre mesuré, **caractérisé en ce que** l'additif est formé par un matériau contenant des carbonates et mis à disposition dans un contenant de stockage (9), qui est relié au préchauffeur (2) ou au calcinateur (3) par l'intermédiaire d'un appareil d'amenée d'additif (10), et l'additif atteint le préchauffeur (2) ou le calcinateur (3) à partir du réservoir de stockage (9) par l'intermédiaire de l'appareil d'amenée d'additif (10) en 30 secondes au maximum.

2. Procédé selon la revendication 1, **caractérisé en ce que** l'additif atteint le préchauffeur (2) ou le calcinateur (3) à partir du réservoir de stockage (9) par l'intermédiaire de l'appareil d'amenée d'additif (10) en 10 secondes au maximum.

3. Procédé selon la revendication 1, **caractérisé en ce que** le contenant de stockage (9) est mis à disposition dans la zone du préchauffeur (2) ou du calcinateur (3).

4. Procédé selon la revendication 1, **caractérisé en ce que** l'additif est formé par une partie du matériau de départ contenant des carbonates (1).

5. Procédé selon la revendication 1, **caractérisé en ce qu'**en tant que paramètre, la température du matériau de départ calciné (1) et/ou la teneur en CO₂ et/ou la perte au feu du matériau de départ calciné (1) et/ou la température d'un gaz d'échappement quittant le calcinateur (3) sont mesurées.

6. Procédé selon la revendication 1, **caractérisé en ce que** l'ajout de l'additif pour influencer la conversion du matériau de départ contenant des carbonates (1) a lieu dans le préchauffeur (2) et/ou directement dans le calcinateur (3).

7. Procédé selon la revendication 1, **caractérisé en ce que** le matériau de départ contenant des carbonates (1) est amené au préchauffeur (2) et au contenant de stockage (9) à l'aide d'un appareil de convoyage commun (13), notamment d'un mécanisme à godets.

8. Procédé selon la revendication 7, **caractérisé en ce qu'**un répartiteur de matériau (14) est prévu entre l'appareil de convoyage (13) et le préchauffeur (2), qui est commandé de telle sorte que le matériau de départ contenant des carbonates (1) soit réparti sur le préchauffeur (2) et le contenant de stockage (9) en fonction d'un niveau de remplissage ou d'un poids de remplissage du contenant de stockage (9).

9. Procédé selon la revendication 8, **caractérisé en ce que** du matériau de départ contenant des carbonates (1) est amené à l'appareil de convoyage (13) par l'intermédiaire d'au moins un appareil de dosage (12), la quantité totale amenée au préchauffeur (2) et au contenant de stockage (9) étant dosée de telle sorte que la quantité de matériau de départ contenant des carbonates (1) amenée au préchauffeur (2) reste constante indépendamment de la quantité de matériau de départ contenant des carbonates (1) amenée au contenant de stockage (9).

10. Unité pour la réalisation du procédé selon la revendication 1, comprenant :
- un préchauffeur (2) pour le préchauffage du matériau de départ (1),
- un calcinateur (3) pour la calcination du matériau de départ préchauffé (1), le calcinateur (3) comprenant un appareil d'amenée de combustible (7) pour le chargement d'un combustible et un appareil d'amenée (6) connecté avec le calcinateur (3) pour le matériau de départ préchauffé (1),
- au moins un appareil de mesure (16, 17, 18) pour la mesure d'au moins un paramètre indiquant la conversion du matériau de départ préchauffé (1) dans le calcinateur (3),
- un appareil de commande et de réglage (19) pour le réglage de l'ajout d'un additif par l'intermédiaire d'un appareil d'amenée d'additif (10) en fonction du paramètre mesuré,
**caractérisée en ce que** l'additif est formé par un matériau contenant des carbonates, pour lequel un contenant de stockage (9) est prévu, qui est relié au préchauffeur (2) ou au calcinateur (3) par l'intermédiaire de l'appareil d'amenée d'additif (10), et l'appareil d'amenée d'additif (10) est configuré pour un transfert de l'additif à partir du contenant de stockage (9) jusqu'au préchauffeur (2) ou jusqu'au calcinateur (3) en 30 secondes au maximum.

11. Unité selon la revendication 10, **caractérisée en ce que** l'appareil de mesure (16, 17, 18) est formé par un capteur de température pour la mesure de la température du matériau de départ calciné (1) et/ou par un capteur de température pour la mesure de la température d'un gaz d'échappement quittant le calcinateur (3) et/ou par un capteur de CO₂ pour la mesure de la teneur en CO₂ et/ou de la perte au feu du matériau de départ calciné (1).

12. Unité selon la revendication 10, **caractérisée en ce que** le contenant de stockage (9) comprend une entrée de matériau et une sortie de matériau, la sortie de matériau étant reliée au préchauffeur (2) ou directement au calcinateur (3).

13. Unité selon la revendication 10, **caractérisée en ce qu'**un appareil de convoyage commun (13) est prévu pour l'amenée du matériau de départ contenant des carbonates (1) au préchauffeur (2) et dans le contenant de stockage (9).

14. Unité selon la revendication 13, **caractérisée en ce qu'**un répartiteur de matériau (14) est prévu entre l'appareil de convoyage commun (13) et le préchauffeur (2), et le contenant de stockage (9) comprend un appareil de mesure du niveau de remplissage ou du poids de remplissage (21), et l'appareil de commande et de réglage (19) est connecté à l'appareil de mesure du niveau de remplissage ou du poids de remplissage (21) et au répartiteur de matériau (14), l'appareil de commande et de réglage (19) étant configuré pour l'ajustement du répartiteur de matériau (14) en fonction du niveau de remplissage ou du poids de remplissage du contenant de stockage (9).

15. Unité selon la revendication 10, **caractérisée en ce que** l'appareil d'amenée d'additif (10, 10.1, 10.2, 10.3) pour l'additif est formé par un appareil de convoyage à force de pesanteur ou un appareil de convoyage pneumatique.
